# EUROPÄISCHE PATENTSCHRIFT

(11) **EP 2 156 977 B1**
(45) Veröffentlichungstag und Bekanntmachung des Hinweises auf die Patenterteilung: **27.03.2013**
(21) Anmeldenummer: 09010361.5
(22) Anmeldetag: 12.08.2009
(51) Int. Cl.: B60K 37/06, G05G 1/10, B60Q 3/04, H01H 13/83, H01H 9/18

(54) **Hintergrundbeleuchtete Bedieneinheit für Baumaschinen**
Backlit operating unit for construction machines
Unité de commande rétro-éclairée pour engins

(30) Priorität: 19.08.2008 DE 202008011050 U
(43) Veröffentlichungstag der Anmeldung: 24.02.2010
(73) Patentinhaber: Wirtgen GmbH, 53578 Windhagen (DE)
(72) Erfinder: Kramer, Thomas, 53639 Königswinter (DE); Montermann, Armin, 56626 Andernach (DE); Busley, Peter, 53454 Linz/Rhein (DE)
(74) Vertreter: Oppermann, Frank

(56) Entgegenhaltungen:
- US-A- 4 376 879
- US-A- 6 156 411

## Beschreibung

Die Erfindung betrifft eine hintergrundbeleuchtete Bedieneinheit für Baumaschinen, insbesondere Straßenfräsmaschinen, Recycler oder Stabilisierer.

Es sind Baumaschinen unterschiedlicher Ausbildung für den Hoch- oder Tiefbau bekannt. Als Straßenbaumaschinen sind beispielsweise Fräsmaschinen, Recycler, Stabilisierer oder Surface Miner bekannt. Die bekannten Baumaschinen verfügen über einen oder mehrere Bedienstände mit einer Bedieneinheit, um die Baumaschine bedienen zu können.

Die Bedieneinheiten der bekannten Baumaschinen, die relativ großen mechanischen Beanspruchungen ausgesetzt sind, verfügen im Allgemeinen über eine steife Frontplatte, in der die für die Bedienung der Maschine erforderlichen Bauteile, beispielsweise Taster, Schalter oder Joysticks etc. eingesetzt sind. Diese Bauteile zur Bedienung der Maschine sind mit der Frontplatte verklemmt oder verschraubt.

Die bekannten hintergrundbeleuchteten Bedieneinheiten verfügen über eine in bestimmten Bereichen transparente Frontplatte, die von hinten beleuchtet wird. Dadurch erscheinen die transparenten Bereiche als helle Zonen, während die übrige Frontplatte dunkel ist. Für hintergrundbeleuchtete Bedieneinheiten sind Frontplatten bekannt, die mit einer bedruckten, im wesentlichen transparenten Folie beklebt sind, auf der die gewünschten graphischen Darstellungen als Negativ aufgedruckt sind. Zur Erhöhung des Kontrastes kann die Folie an ihrer Rückseite in den nicht hintergrundbeleuchteten Bereichen mit einer Aluminium-Sperrschicht versehen sein. Die Sperrschicht soll verhindern, dass die nicht hintergrundbeleuchteten Bereiche durchscheinen, wenn die Frontplatte von hinten beleuchtet wird.

Es ist bekannt, die Frontplatte aus Aluminiumblech zu fertigen und in den hintergrundbeleuchteten Bereichen Ausnehmungen vorzusehen. Dies erweist sich als nachteilig, da die Folie im Bereich der Ausnehmungen einfällt, was optisch in Erscheinung tritt. Zudem wirkt die Folie an dieser Stelle wie eine Membran, die den mechanischen Belastungen nicht gewachsen ist. Wird die Membran durchbrochen, kann z.B. Flüssigkeit eindringen, und die Frontplatte muss aufwändig repariert werden.

Es ist es auch schon bekannt, die Frontplatte aus transparentem Material, z.B. aus Polycarbonat herzustellen. Aufgrund der hohen mechanischen Belastungen, die auf eine Frontplatte einwirken können, muss die Materialstärke in diesem Fall um ein Vielfaches dicker gewählt werden, als bei der Verwendung von Aluminiumblech. Die handelsüblichen Bauteile zur Bedienung der Maschine, beispielsweise Schalter, Taster oder Joysticks, setzen allerdings eine vorgegebene Materialstärke für die Frontplatte voraus, um die Bauteile montieren zu können. Dies ergibt sich aus der Dimensionierung der Befestigungselemente, beispielsweise aus der Gewindelänge bei Schraubverbindungen oder dem Abstand der Arretierungselemente bei Schnappverbindungen. Deshalb reichen bei der Verwendung von Polycarbonat-Scheiben mit einer zu dicken Materialstärke einfache Durchbrüche nicht aus, und es müssen abgesetzte Durchbrüche geschaffen werden, die aufwändig herzustellen sind.

Eine Bedieneinheit mit den Merkmalen des Oberbegriffs des Anspruchs 1 ist bekannt aus US-4 376 879.

Der Erfindung liegt die Aufgabe zu Grunde, eine hintergrundbeleuchtete Bedieneinheit für Baumaschinen zu schaffen, die eine einfache und schnelle Montage der zur Bedienung der Baumaschine erforderlichen Bauteile in der Frontplatte der Bedieneinheit erlaubt, wobei die Frontplatte einfach und kostengünstig herzustellen ist.

Die Lösung dieser Aufgabe erfolgt erfindungsgemäß mit den Merkmalen des Patentanspruchs 1. Vorteilhafte Ausführungsformen der Erfindung sind Gegenstand der Unteransprüche.

Die Frontplatte der erfindungsgemäßen hintergrundbeleuchteten Bedieneinheit ist als eine Sandwichkonstruktion ausgebildet. Die Sandwichkonstruktion besteht aus einer transparenten Folie, die mit graphischen Darstellungen versehen ist, so dass die Folie in bestimmten Bereichen für Licht nicht durchlässig ist, eine transparente Montageplatte, auf der die transparente Folie aufgebracht ist, und eine Trägerplatte, auf der die transparente Montageplatte mit der transparenten Folie aufgebracht ist. Dabei sorgen Montage- und Trägerplatte für eine ausreichende Steifigkeit der Frontplatte. Beispielsweise können auf der mit graphischen Darstellungen versehenen Folie bestimmte Symbole als transparente Flächen oder nicht transparente Flächen dargestellt werden, während die übrigen Bereiche der Folie nicht transparent bzw. transparent sind. Damit erscheinen die Symbole hell auf dunklem Hintergrund bzw. dunkel auf hellem Hintergrund.

Die Trägerplatte kann aus einem transpartenten oder nicht transparenten Material bestehen. Wenn die Trägerplatte nicht aus transparentem Material gefertigt ist, weist sie zur Hintergrundbeleuchtung unter den graphischen Darstellungen angeordnete Ausnehmungen auf, durch die das Licht der hinter der Frontplatte angeordneten Beleuchtungseinrichtung hindurchtreten kann.

Wenn in diesem Zusammenhang von einer transparenten Folie oder einer transparenten Montageplatte oder Trägerplatte die Rede ist, wird darunter eine Folie oder Platte verstanden, die für Licht zumindest teilweise durchlässig ist. Dabei braucht die Folie oder Platte aber nicht glasklar zu sein, sondern kann auch in verschiedenen Farben eingefärbt sein. Ebenso kann die Oberfläche einer bestimmten Behandlung unterzogen sein, um besondere Effekte zu erzielen, z.B. kann die Oberfläche gestrahlt sein, um ein diffuses Licht zu erzeugen. Unter Bauteilen zur Bedienung der Baumaschine werden nicht nur alle Betätigungselemente wie Schalter, Taster oder Joysticks, sondern auch Anzeigeeinheiten oder der gleichen verstanden, die dem Bediener der Baumaschine bestimmte Betriebzustände signalisieren.

Bei einer besonders bevorzugten Ausführungsform der erfindungsgemäßen Bedieneinheit sind für die Montage der Bauteile zur Bedienung der Baumaschine Ausnehmungen sowohl in der transparenten Montageplatte als auch der Trägerplatte vorgesehen. Die übereinander angeordneten Ausnehmungen in Montage- und Trägerplatte werden jeweils von einem umlaufenden Rand begrenzt und sind derart bemessen, dass sich der umlaufende Rand der Ausnehmungen in der Montageplatte unter Bildung einer Anlagefläche zur Befestigung der Bauteile zur Bedienung der Baumaschine über den umlaufenden Rand in der Trägerplatte nach innen erstreckt. Dadurch wird erreicht, dass unabhängig von der Materialstärke der Trägerplatte sichergestellt ist, dass sich die handelsüblichen Bauteile zur Bedienung der Baumaschine an der Frontplatte befestigen lassen. Allein entscheidend ist die Stärke der transparenten Montageplatte, auf der die Folie aufgebracht ist. Die Stärke der Trägerplatte hingegen kann unabhängig von der Dimensionierung der Bauteile zur Bedienung der Baumaschine in Abhängigkeit von den Anforderungen an die Steifigkeit der Frontplatte unterschiedlich bemessen werden. Vorteilhafter Weise wird die Materialstärke der Frontplatte derart gewählt, dass sie der geringsten maximalen Klemmdicke aller verwendeten Bauteile entspricht. Besitzt ein Bauteil eine maximale Klemmdicke die größer oder gleich der Summe aus Montage- und Trägerplattenstärke ist, dann können die Ausnehmungen von Montage - und Trägerplatte gleich groß bemessen werden. Die Größe der Ausnehmungen in der Montage- und Trägerplatte bestimmt sich nach den Abmessungen der Bauteile zur Bedienung der Baumaschine. Unabhängig von der Größe der Ausnehmungen in der Montage- und Trägerplatte oder der Materialstärke von Montage- und Trägerplatte handelt es sich bei den Ausnehmungen um einfache Durchbrüche, die sich mit kostengünstigen Verfahren, wie Wasserstrahlschneiden oder Laserschneiden herstellen lassen.

Bei einer weiteren bevorzugten Ausführungsform der erfindungsgemäßen Bedieneinheit weisen die in die Frontplatte eingesetzten Bauteile zur Bedienung der Baumaschine einen Gehäusekörper auf, der in die übereinander angeordneten Ausnehmungen der Montage- und Trägerplatte eingesetzt ist. Der Gehäusekörper weist vorzugsweise mindestens einen nach außen weisenden, oberen Ansatz auf, mit dem der Gehäusekörper auf der Folie aufliegt, und mindestens einen nach außen weisenden, unteren Ansatz auf, mit der sich der Gehäusekörper an der Anlagefläche der Montageplatte abstützt. Es können also die handelsüblichen Bauteile mit Schraub- und Schnappverbindungen an der Frontplatte montiert werden. Dabei wird der nach außen weisende, untere Ansatz des Gehäusekörpers, der sich an der Anlagefläche der Montageplatte abstützt, von einer Befestigungsmutter oder mindestens einem Arretierungselement gebildet. Das Arretierungselement kann beispielsweise als hakenförmiger Ansatz des Gehäusekörpers ausgebildet sein, mit dem der Gehäusekörper einschnappend in der Frontplatte festgelegt ist.

Die Träger- und Montageplatte können aus unterschiedlichen Materialien gefertigt sein. Bei einer bevorzugten Ausführungsform ist die Trägerplatte eine Metallplatte und/oder die Montageplatte eine Kunststoffplatte.

Die Ausnehmungen in der Träger- und Montageplatte sind vorzugsweise rechteckförmige oder runde Ausnehmungen, so dass sich die handelsüblichen Bauteile zur Bedienung der Baumaschine, die über entsprechende Gehäusekörper verfügen, passend in die Ausnehmungen einsetzen lassen.

Neben den Ausnehmungen für die Hintergrundbeleuchtung und die Ausnehmungen zur Aufnahme der Bauteile zur Bedienung der Baumaschine verfügt die Trägerplatte der Frontplatte vorzugsweise noch über weitere Ausnehmungen zur Aufnahme weiterer Bauteile für die Nachrüstung der Bedieneinheit. Wenn die Bedieneinheit mit weiteren Schaltern oder Tastern nachgerüstet werden soll, ist es lediglich erforderlich, in der vorzugsweise aus Kunststoff bestehenden Montageplatte entsprechende Durchbrüche vorzunehmen. Hierzu kann die Montageplatte mit Sollbruchstellen versehen sein. Die vorzugsweise aus Metall bestehende Trägerplatte wird hingegen mit einer vollständigen Ausnehmung versehen.

Eine weitere besonders bevorzugte Ausführungsform sieht eine hinter der Frontplatte angeordnete Platine vor, auf der die Beleuchtungseinrichtung befestigt ist. Bei der Platine kann es sich um eine kupferkaschierte Platine handeln, die mit Leiterbahnen versehen ist. Die Beleuchtungseinrichtung zur Hintergrundbeleuchtung der Frontplatte weist vorzugsweise eine Mehrzahl von Leuchtdioden LED auf, mit denen die Platine bestückt ist. Zur Hintergrundbeleuchtung können aber auch andere Leuchtmittel verwendet werden.

Neben der Beleuchtungseinrichtung kann die Platine noch weitere Schaltkreise tragen, die für die Bedieneinheit erforderlich sind, insbesondere kann die Kontaktierung der Bauteile zur Bedienung der Baumaschine auf der Platine erfolgen.

Bei einer weiteren besonders bevorzugten Ausführungsform sind in die Montage- und/oder Trägerplatte der Frontplatte Pressbolzen eingepresst, mit denen die Platine verschraubt ist. Die Sandwichkonstruktion aus Montage- und Trägerplatte erlaubt dabei eine sichere Befestigung der Bolzen, insbesondere dann, wenn als Trägerplatte eine Metallplatte verwendet wird.

Zudem kann auf der Trägerplatte umlaufend am äußeren Rand eine Dichtung aufgebracht sein.

Im Folgenden wird die Erfindung unter Bezugnahme auf die Zeichnungen näher erläutert.

Es zeigen:
- Fig. 1: die erfindungsgemäße Bedieneinheit mit der Frontplatte in der Draufsicht,
- Fig. 2: einen Schnitt entlang der Linie II-II von Fig. 1,
- Fig. 3: den Ausschnitt III von Fig. 2 in vergrößerter Darstellung,
- Fig. 4: einen Schnitt entlang der Linie IV-IV von Fig. 1,
- Fig. 5: den Ausschnitt V von Fig. 4 in vergrößerter Darstellung und
- Fig. 6: den Ausschnitt VI von Fig. 4 in vergrößerter Darstellung.

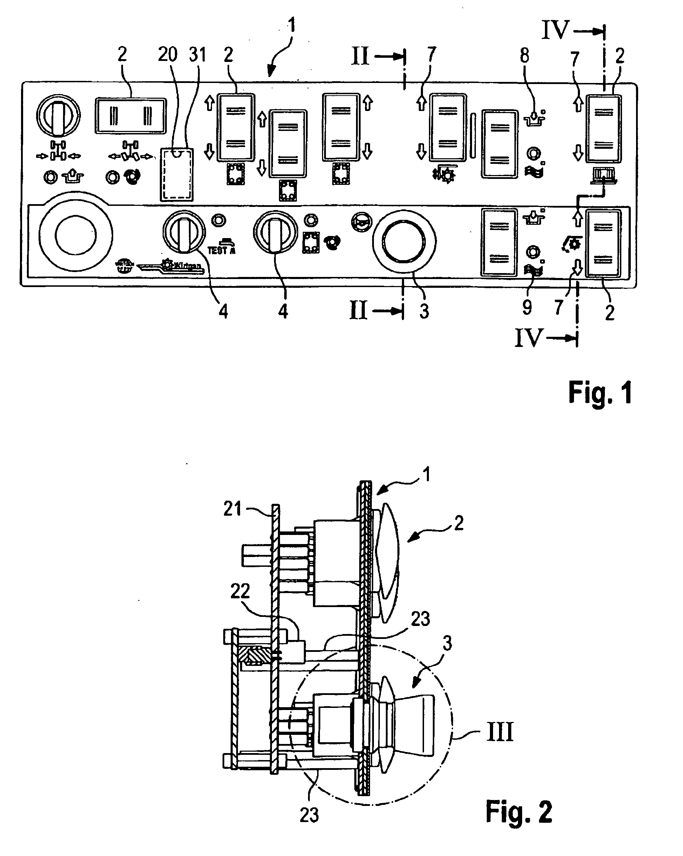

Fig. 1 zeigt die Bedieneinheit für eine Baumaschine in der Draufsicht. Die Bedieneinheit weist eine Frontplatte 1 auf, in die verschiedene Bauteile 2, 3, 4 zur Bedienung der Baumaschine eingesetzt sind. Bei der Frontplatte handelt es sich um eine hintergrundbeleuchtete Frontplatte, die als eine Sandwichkonstruktion ausgebildet ist.

Der Aufbau der Frontplattel ist aus den Fig. 2 bis 6 ersichtlich. Die Frontplatte 1 weist eine rechteckförmige transparente Kunststoffplatte 5 auf, deren Stärke derart bemessen ist, dass sich die Bauteile 2, 3, 4 zur Bedienung der Baumaschine montieren lassen. Die Montage der Bauteile zur Bedienung der Baumaschine wird nachfolgend noch im Einzelnen beschrieben.

Auf die transparente Kunststoffplatte 5 ist eine bedruckte transparente Folie 6 aufgebracht. Die Folie 6 ist derart bedruckt, dass verschiedene Bereiche, die unterschiedliche Symbole darstellen, nicht bedruckt, alle übrigen Flächen aber bedruckt sind. Daher ist die Folie im Bereich der Symbole für Licht durchlässig, in den übrigen Bereichen für Licht jedoch nicht durchlässig. Fig. 1 zeigt die verschiedenen Symbole 7, 8, 9, mit denen die transparente Folie 6 der Frontplatte 1 "bedruckt" ist. Es versteht sich, dass auch farbige Symbole darstellbar sind, wenn für die Symbole Farbe verwendet wird, die nicht vollständig deckt.

Die Montageplatte 5 ist mit mehreren runden Ausnehmungen 10 oder in den Figuren nicht dargestellten rechteckförmigen Ausnehmungen zur Aufnahme der Bauteile 2, 3 zur Bedienung der Baumaschine versehen, wobei die Formen und Abmessungen der Ausnehmungen 10 sich nach der Art der Bauteile zur Bedienung der Baumaschine bestimmen.

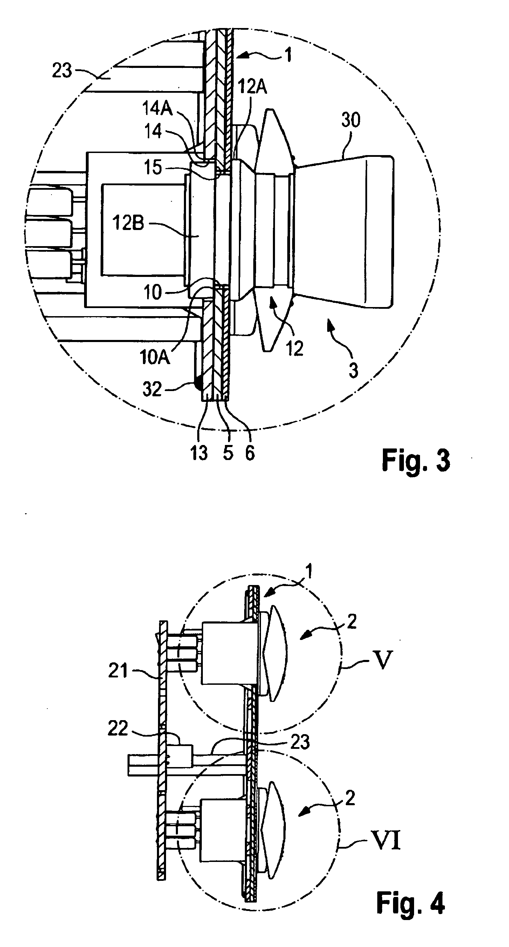

Fig. 3 zeigt in vergrößerter Darstellung einen Taster 3, der in eine runde Ausnehmung 10 eingesetzt ist. Der Taster 3 weist einen zylindrischen Gehäusekörper 12 mit einem Tasterknopf 30 auf. Der zylindrische Gehäusekörper 12 sitzt in der runden Ausnehmung 10 der Montageplatte 5, wobei der Taster mit einem umlaufenden nach außen weisenden Ansatz 12A auf der Oberseite der Frontplatte, d.h. auf der Oberseite der Folie 6 aufliegt. Der Taster 3 ist mit einer Befestigungsmutter 12B mit der Montageplatte 5 der Frontplatte 1 verschraubt.

Die Montageplatte 5 mit der Folie 6 ist auf eine rechteckförmige Trägerplatte 13 aus Aluminium aufgebracht. Die Trägerplatte 13 aus Aluminium stellt nicht nur die erforderliche Steifigkeit der Sandwichkonstruktion sicher, sondern kann auch als lichtundurchlässige Sperrschicht für die Hintergrundbeleuchtung dienen.

Die Trägerplatte 13 weist wie die Montageplatte 5 den Formen und Abmessungen der Bauteile 2, 3 zur Bedienung der Baumaschine angepasste Ausnehmungen 14 auf, die unterhalb der entsprechenden Ausnehmungen 10 in der Montageplatte 5 angeordnet sind. Fig. 3 zeigt eine runde Ausnehmung 14 in der Trägerplatte 13, deren Durchmesser geringfügig größer als der Durchmesser der entsprechenden Ausnehmung 10 in der Montageplatte 5 ist. Beide Ausnehmungen werden von einem umlaufenden Rand 10A, 14A begrenzt, wobei aufgrund der unterschiedlichen Durchmesser der beiden Ausnehmungen zwischen dem inneren umlaufenden Rand 10A der Ausnehmung 10 in der Montageplatte 5 und dem inneren umlaufenden Rand 14A der Ausnehmung 14 in der Trägerplatte 13 eine kreisringförmige Anlagefläche 15 liegt, an der sich die Befestigungssmutter 12B des Tasters 3 abstützt. Weiterhin ist aus Fig. 3 ersichtlich, dass der Durchmesser der Ausnehmung 14 in der Trägerplatte 13 geringfügig größer als der Durchmesser der Befestigungsmutter 12B des Tasters 3 ist. Von Vorteil ist, dass sich der Taster 3 unabhängig von der Stärke der Trägerplatte 13 mit der Montageplatte 5 verschrauben lässt. Allein entscheidend ist die Stärke der Montageplatte 5, deren Stärke dem zur Verfügung stehenden Klemmbereich des Tasters 3 entspricht.

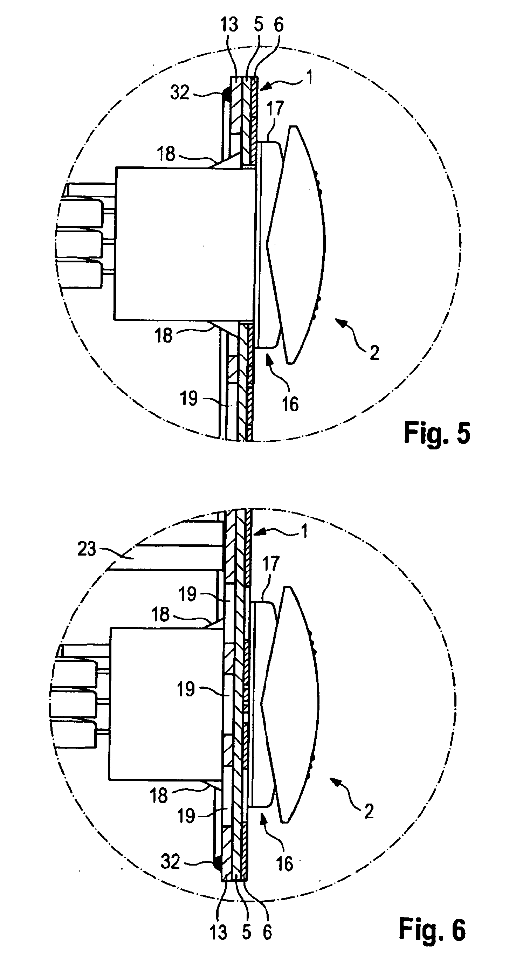

Neben den Tastern 3 weist die Bedieneinheit auch Schalter 2 auf, deren Gehäusekörper 16 einen rechteckförmigen Querschnitt haben. Daher sind die Ausnehmungen in Montage- und Trägerplatte 5, 13 rechteckförmige Ausnehmungen entsprechender Dimensionierung. Die Gehäusekörper 16 der Schalter 2 weisen wieder einen oberen, nach außen weisenden Ansatz 17 auf, mit denen die Taster auf der Frontplatte aufliegen, und zwei gegenüberliegende nach außen, weisende untere Ansätze 18 auf, die hakenförmig ausgebildet sind. Mit den hakenförmigen Ansätzen 18 stützen sich die Schalter 2 an der Anlagefläche der Montageplatte 5 ab (Fig. 5).

Neben den Ausnehmungen für die Taster und Schalter weist die Montageplatte Ausnehmungen für die Hintergrundbeleuchtung der Symbole auf, wobei die Abmessungen und Formen dieser Ausnehmungen an die jeweiligen Symbole angepasst sind. Beispielsweise sind unter den "Pfeilen" 7 rechteckförmige Ausnehmungen 19 in der Trägerplatte 13 vorgesehen (Fig. 5). Wenn die Frontplatte 1 von hinten beleuchtet wird, tritt das Licht durch die Ausnehmungen 19 in der Trägerplatte 13, die transparente Montageplatte 5 und die im Bereich der "Pfeile" transparente Folie 6 hindurch, so dass die "Pfeile" hell, der Hintergrund aber dunkel erscheint.

Für die Nachrüstung von weiteren Tastern oder Schaltern oder auch anderen Bauteilen zur Bedienung der Baumaschine können noch weitere Ausnehmungen 20 in der Trägerplatte 13 vorgesehen sein, von denen in Fig. 1 aber nur eine Ausnehmung in gestrichelten Linien angedeutet ist. Diese Ausnehmungen 20 können sich in entsprechenden Bereichen der Frontplatte befinden, an denen weitere Taster oder Schalter eingesetzt werden sollen. Diese Bereiche können an der Oberseite der Folie 6 gekennzeichnet sein. Beispielsweise kann die Folie 6 mit einem rechteckförmigen Linienzug 31 in dem Bereich gekennzeichnet sein, unter dem sich die für die Nachrüstung eines weiteren Schalters 2 befindliche Ausnehmung 20 in der Trägerplatte 13 befindet. Die entsprechende Ausnehmung in der Montageplatte kann mit einer Sollbruchstelle versehen sein, so dass sich die Ausnehmung im Nachhinein leicht herstellen lässt.

Die Hintergrundbeleuchtung für die Frontplatte befindet sich auf einer hinter der Frontplatte 1 angeordneten Platine 21, die eine gedruckte Schaltung ist. Die Beleuchtungseinrichtung besteht aus einer Vielzahl von Leuchtdioden 22, mit denen die Platine 21 auf der Seite, die der Frontplatte 1 zugewandt ist, bestückt ist. Auf der Platine 21 befinden sich auch aus den Figuren aber nicht ersichtliche Leiterbahnen zur Kontaktierung der Bauteile zur Bedienung der Baumaschine. Die Platine 21 ist mit mehreren Einpressbolzen 23 verschraubt, die in die Trägerplatte 13 der Frontplatte 1 eingepresst sind. Eine am Rand der Trägerplatte umlaufend aufgebrachte Dichtung 32 ist in Fig. 5 zu sehen.

Die erfindungsgemäße Bedieneinheit kann nicht nur bei Baumaschinen, sondern auch bei allen anderen Maschinen Verwendung finden.

## Patentansprüche

1. Hintergrundbeleuchtete Bedieneinheit für Baumaschinen, mit
einer Frontplatte (1),
in Ausnehmungen der Frontplatte eingesetzte Bauteile (2, 3) zur Bedienung der Baumaschine,
wobei auf der Frontplatte eine im wesentlichen transparente Folie (6) aufgebracht ist, die mit graphischen Darstellungen versehen ist, und
einer hinter der Frontplatte angeordneten Beleuchtungseinrichtung (22) zur Hintergrundbeleuchtung der Frontplatte,
**dadurch gekennzeichnet, dass**
die Frontplatte (1) als eine Sandwichkonstruktion ausgebildet ist, wobei die Sandwichkonstruktion aufweist:
eine im wesentlichen transparente Montageplatte (5), auf der die Folie (6) aufgebracht ist, und
eine Trägerplatte (13), auf der die Montageplatte (5) mit der Folie (6) aufgebracht ist.

2. Bedieneinheit für Baumaschinen nach Anspruch 1, **dadurch gekennzeichnet, dass** die Montageplatte (5) und die Trägerplatte (13) zur Aufnahme der Bauteile (2, 3) zur Bedienung der Baumaschine übereinander angeordnete Ausnehmungen (10, 14) aufweisen, die jeweils von einem umlaufenden Rand (10A, 14A) begrenzt werden und derart bemessen sind, dass sich der umlaufende Rand (10A) der Ausnehmungen (10) in der Montageplatte (5) unter Bildung einer Anlagefläche (15) zur Befestigung der Bauteile zur Bedienung der Baumaschine über den umlaufenden Rand (14A) in der Trägerplatte (13) nach innen erstreckt.

3. Bedieneinheit für Baumaschinen nach Anspruch 2, **dadurch gekennzeichnet, dass** die in die Frontplatte (1) eingesetzten Bauteile (2, 3) zur Bedienung der Baumaschine einen Gehäusekörper (12) aufweisen, der in die übereinander angeordneten Ausnehmungen (10, 14) der Montageplatte (5) und der Trägerplatte (13) eingesetzt ist, wobei der Gehäusekörper (12) mit mindestens einem nach außen weisenden, oberen Ansatz (12A) auf der Folie (6) aufliegt und mit mindestens einem nach außen weisenden, unteren Ansatz (12B) an der Anlagefläche (15) der Montageplatte (13) abgestützt ist.

4. Bedieneinheit für Baumaschinen nach Anspruch 3, **dadurch gekennzeichnet, dass** der nach außen weisende, untere Ansatz des Gehäusekörpers (12; 16) von einer Befestigungsmutter (12A) oder mindestens einem Arretierungselement (18) gebildet wird.

5. Bedieneinheit für Baumaschinen nach einem der Ansprüche 1 bis 4, **dadurch gekennzeichnet, dass** die Trägerplatte (13) eine Metallplatte und/oder die Montageplatte (5) eine Kunststoffplatte ist.

6. Bedieneinheit für Baumaschinen nach einem der Ansprüche 1 bis 5, **dadurch gekennzeichnet, dass** die Ausnehmungen (10, 14) in der Trägerplatte (13) und der Montageplatte (5) rechteckförmige oder runde Ausnehmungen sind.

7. Bedieneinheit für Baumaschinen nach einem der Ansprüche 1 bis 6, **dadurch gekennzeichnet, dass** die Trägerplatte (13) eine für Licht nicht durchlässige Platte ist, wobei die Trägerplatte (13) zur Hintergrundbeleuchtung unter den grafischen Darstellungen angeordnete Ausnehmungen (19) aufweist, durch die das Licht der Beleuchtungseinrichtung (22) hindurch tritt.

8. Bedieneinheit für Baumaschinen nach einem der Ansprüche 1 bis 7, **dadurch gekennzeichnet, dass** die Trägerplatte (13) neben den Ausnehmungen (19) für die Hintergrundbeleuchtung (22) und die Ausnehmungen (14) zur Aufnahme der Bauteile (2, 3) zur Bedienung der Baumaschine weitere Ausnehmungen (20) zur Aufnahme weiterer Bauteile zur Bedienung der Baumaschine für die Nachrüstung der Bedieneinheit aufweist.

9. Bedieneinheit für Baumaschinen nach einem der Ansprüche 1 bis 8, **dadurch gekennzeichnet, dass** die Bedieneinheit eine hinter der Frontplatte (1) angeordnete Platine (21) aufweist, auf der die Beleuchtungseinrichtung (22) angeordnet ist.

10. Bedieneinheit für Baumaschinen nach Anspruch 9, **dadurch gekennzeichnet, dass** die Beleuchtungseinrichtung eine Mehrzahl von Leuchtdioden LEDs (22) aufweist.

11. Bedieneinheit für Baumaschinen nach Anspruch 9 oder 10, **dadurch gekennzeichnet, dass** in die Montage- und/oder Trägerplatte (5, 13) der Frontplatte (1) Einpressbolzen (23) eingepresst sind, mit denen die Platine (21) verschraubt ist.

12. Bedieneinheit für Baumaschinen nach einem der Ansprüche 1 bis 11, **dadurch gekennzeichnet, dass** das Bauteil zur Bedienung der Baumaschine ein Schalter (2) oder Taster (3) ist.

## Claims

1. Backlit control unit for civil engineering machines, having a front panel (1), having components (2, 3) for controlling the civil engineering machine which are inserted in openings in the front panel, a substantially transparent film (6) which is provided with graphic representations being applied to the front panel, and having a backlighting means (22) for backlighting the front panel which is arranged behind the front panel, **characterised in that** the front panel (1) is in the form of a sandwich structure, the sandwich structure having: a substantially transparent mounting board (5) to which the film (6) is applied, and a base board (13) to which the mounting board (5) carrying the film (6) is applied.

2. Control unit for civil engineering machines according to claim 1, **characterised in that**, to receive the components (2, 3) for controlling the civil engineering machine, the mounting board (5) and the base board (13) have openings (10, 14) arranged over the top of one another which are respectively bounded by edges (10A, 14A) extending round in a loop and which are of respective sizes such that the edges (10A) extending round in a loop of the openings (10) in the mounting board (5) extend inwards beyond the edges (14A) extending round in a loop in the base board (13) to form surfaces for contact (15) for fixing in place the components for controlling the civil engineering machine.

3. Control unit for civil engineering machines according to claim 2,
**characterised in that** the components (2, 3) for controlling the civil engineering machine
which are inserted in the front panel (1) have an enclosure part (12) which is inserted in the openings (10, 14) arranged over the top of one another in the mounting board (5) and the base board (13), the enclosure part (12) resting against the film (6) by at least one outward pointing top projection (12A) and
being supported against the surface for contact (15) of the mounting board (13) by at least one outward pointing bottom projection (12B).

4. Control unit for civil engineering machines according to claim 3, **characterised in that** the outward pointing bottom projection on the enclosure part (12; 16) is formed by a fastening nut (12A) or at least one retaining member (18).

5. Control unit for civil engineering machines according to one of claims 1 to 4, **characterised in that** the base board (13) is a metal plate and/or the mounting board (5) is a plastics board.

6. Control unit for civil engineering machines according to one of claims 1 to 5, **characterised in that** the openings (10, 14) in the base board (13) and the mounting board (5) are square-cornered or round openings.

7. Control unit for civil engineering machines according to one of claims 1 to 6, **characterised in that** the base board (13) is a board non-transmissive of light, the base board (13) having for backlighting purposes openings (19) arranged under the graphic representations, through which the light from the backlighting means (22) is able to pass.

8. Control unit for civil engineering machines according to one of claims 1 to 7, **characterised in that**, as well as the openings (19) for the backlighting means (22) and the openings (14) to receive the components (2, 3) for controlling the civil engineering machine, the base board (13) has other openings (20) to receive other components for controlling the civil engineering machine which are to be retrofitted to the control unit.

9. Control unit for civil engineering machines according to one of claims 1 to 8, **characterised in that** the control unit has a printed circuit board (21) arranged behind the front panel (1) on which the lighting means (22) is arranged.

10. Control unit for civil engineering machines according to claim 9, **characterised in that** the lighting means has a plurality of lighting-emitting diodes (LED's) (22).

11. Control unit for civil engineering machines according to claim 9 or 10, **characterised in that** there are pressed into the mounting board and/or the base board (5, 13) of the front panel (1) pressed-in pillars (23) to which the printed circuit board (21) is screwed.

12. Control unit for civil engineering machines according to one of claims 1 to 11, **characterised in that** the component for controlling the civil engineering machine is a switch (2) or a press-button (3).

## Revendications

1. Unité de commande rétro-éclairée pour engins de chantier, comprenant
une plaque avant (1),
des composants (2, 3) insérés dans des évidements de la plaque avant destinés à commander l'engin,
un film (6) sensiblement transparent étant appliqué sur la plaque avant, lequel est pourvu de représentations graphiques, et
un dispositif d'éclairage (22) disposé derrière la plaque avant pour son rétroéclairage,
**caractérisée en ce que**
la plaque avant (1) est réalisée en sandwich, le sandwich présentant :
une plaque de montage (5) sensiblement transparente, sur laquelle le film (6) est appliqué, et
une plaque support (13), sur laquelle la plaque de montage (5) est appliquée avec le film (6).

2. Unité de commande pour engins de chantier selon la revendication 1, **caractérisée en ce que** la plaque de montage (5) et la plaque support (13) présentent, pour la réception des composants (2, 3) destinés à commander l'engin, des évidements (10, 14) disposés l'un au-dessus de l'autre qui sont respectivement délimités par un bord périphérique (10A, 14A) et sont dimensionnés de telle manière que le bord périphérique (10A) des évidements (10) de la plaque de montage (5) s'étende vers l'intérieur en formant une surface d'appui (15) pour la fixation des composants destinés à commander l'engin sur le bord périphérique (14A) de la plaque support (13).

3. Unité de commande pour engins de chantier selon la revendication 2, **caractérisée en ce que** les composants (2, 3) insérés dans la plaque avant (1) destinés à commander l'engin présentent un corps de boîtier (12) qui est inséré dans les évidements (10, 14) disposés l'un au-dessus de l'autre de la plaque de montage (5) et la plaque support (13), le corps de boîtier (12) reposant sur le film (6) par au moins une saillie supérieure (12A) dirigée vers l'extérieur et étant en appui par au moins une saillie (12B) inférieure dirigée vers l'extérieur contre la surface d'appui (15) de la plaque de montage (13).

4. Unité de commande pour engins de chantier selon la revendication 3, **caractérisée en ce que** la saillie inférieure dirigée vers l'extérieur du corps de boîtier (12 ; 16) est formée par un écrou de fixation (12A) ou au moins un élément de blocage (18).

5. Unité de commande pour engins de chantier selon l'une quelconque des revendications 1 à 4, **caractérisée en ce que** la plaque support (13) est une plaque métallique et/ou la plaque de montage (5) est une plaque en plastique.

6. Unité de commande pour engins de chantier selon l'une quelconque des revendications 1 à 5, **caractérisée en ce que** les évidements (10, 14) dans la plaque support (13) et la plaque de montage (5) sont des évidements rectangulaires ou ronds.

7. Unité de commande pour engins de chantier selon l'une quelconque des revendications 1 à 6, **caractérisée en ce que** la plaque support (13) est une plaque non perméable à la lumière, la plaque support (13) présentant des évidements (19) disposés sous les représentations graphiques pour le rétroéclairage, par lesquels la lumière du dispositif d'éclairage (22) passe.

8. Unité de commande pour engins de chantier selon l'une quelconque des revendications 1 à 7, **caractérisée en ce que** la plaque support (13) présente, outre les évidements (19) pour le rétroéclairage (22) et les évidements (14) pour la réception des composants (2, 3) destinés à commander l'engin, d'autres évidements (20) pour la réception d'autres composants destinés à commander l'engin en vue du rééquipement de l'unité de commande.

9. Unité de commande pour engins de chantier selon l'une quelconque des revendications 1 à 8, **caractérisée en ce que** l'unité de commande présente une platine (21) agencée derrière la plaque avant (1), sur laquelle le dispositif d'éclairage (22) est disposé.

10. Unité de commande pour engins de chantier selon la revendication 9, **caractérisée en ce que** le dispositif d'éclairage présente une pluralité de diodes électroluminescentes LED (22).

11. Unité de commande pour engins de chantier selon la revendication 9 ou 10, **caractérisée en ce que** des boulons à enfoncer (23), avec lesquels la platine (21) est vissée, sont enfoncés dans la plaque de montage et/ou support (5, 13) de la plaque avant (1).

12. Unité de commande pour engins de chantier selon l'une quelconque des revendications 1 à 11, **caractérisée en ce que** le composant destiné à commander l'engin est un commutateur (2) ou un bouton-poussoir (3).
